# EUROPEAN PATENT APPLICATION

(11) **EP 2 284 461 A1**
(43) Date of publication of application: **16.02.2011**
(21) Application number: 10251341.3
(22) Date of filing: 28.07.2010
(51) Int. Cl.: F25B 41/06, F16K 31/04

(54) **Expansion valve for a refrigerant system**

(30) Priority: 28.07.2009 US 510542
(71) Applicant: Hamilton Sundstrand Corporation, Windsor Locks, CT 06096-1010 (US)
(72) Inventor: Hamel, Paul E., Enfield, CT 06082 (US); Labrie, Jason, Westfield, MA 01085 (US)
(74) Representative: Tomlinson, Kerry John

(57) **Abstract**

A refrigerant expansion valve (16) for a refrigerant system includes a main body (44), a motor (30) and first (36) and second (40) members. The main body has a refrigerant flow passage (66, 70, 72) that extends therethrough. The first and second members are connected together and are configured with threads (50A, 50B, 56A, 56B) that have a different pitch to allow for relative movement between both members and the main body. The motor is positioned adjacent the main body and is coupled to the first member. The motor actuates the first member in response to control signals to move the second member within the main body to modulate the flow of refrigerant through the refrigerant flow passage.

## Description

### BACKGROUND

The present invention relates to refrigerant systems, and more particularly, to a refrigerant expansion valve with improved resolution for superheat control.

Refrigerant systems such as heat pumps and air conditioning systems commonly utilize an expansion valve disposed between a condenser and an evaporator. The expansion valve throttles the flow of a refrigerant to the evaporator, thereby lowering its pressure and controlling the degree of superheat downstream of the evaporator.

Electrically operated expansion valves are commonly used in transportation vehicles such as automobiles and aircraft. These valves are commonly assembled with stepper motors because of the ability of stepper motors to move a predetermined angular displacement per step. This angular displacement is converted to linear translation within the valve by means of screw threads. The minimum angular displacement (and linear translation within the valve) is limited by the number of steps per revolution of the stepper motor. Expansion valves require very small linear displacements per step in order to accurately control operating conditions such as the degree of superheat downstream of the evaporator. Because of the high degree of resolution required for precise control of refrigerant systems, in many situations direct drive of the expansion valve by the stepper motor is not feasible. To increase the resolution of the expansion valve and increase the precision of refrigerant system control, a gear train can be utilized to reduce the angular output displacement per step and increase the resolution of the expansion valve. However, gear trains are not desirable in transportation vehicles because they add weight and parts to the vehicle, increase system hysteresis, and reduce the reliability of the expansion valve assembly.

### SUMMARY

A refrigerant expansion valve for a refrigerant system includes a main body, a motor and first and second members. The main.body has a refrigerant flow passage that extends therethrough. The first and second members are connected together and are configured with threads that have a different pitch to allow for relative movement between both members and the main body. The motor is positioned adjacent the main body and is coupled to the first member. The motor actuates the first member in response to control signals to move the second member within the main body to modulate the flow of refrigerant through the refrigerant flow passage.

### BRIEF DESCRIPTION OF THE DRAWINGS

FIG. 1 is a schematic diagram of one embodiment of a refrigerant system operating in an air conditioning cycle and including a refrigerant expansion valve.

FIG. 2A is cross-sectional view of one embodiment of the refrigerant expansion valve and a motor.

FIG. 2B is a cross-sectional view of the refrigerant expansion valve and motor taken along plane 2B-2B of FIG. 2A.

### DETAILED DESCRIPTION

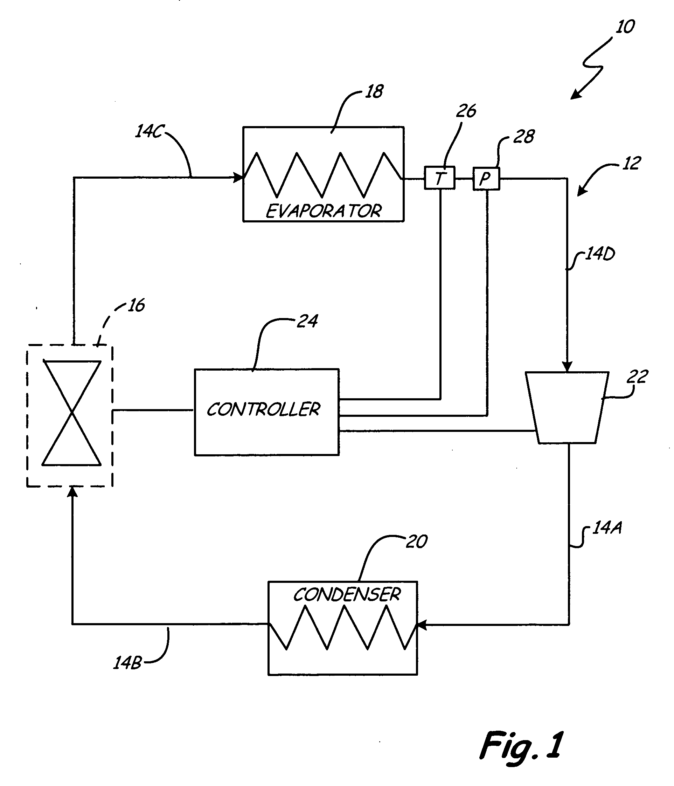

FIG. 1 is a schematic showing a refrigerant system 10, in particular, an air conditioning system 12. The air conditioning system 12 includes refrigerant lines 14A-14D, a refrigerant expansion valve assembly 16, an evaporator 18, a condenser 20, a compressor 22, a controller 24, a first temperature sensor 26 and a first pressure sensor 28.

The refrigerant lines 14A-14D fluidly connect the refrigerant expansion valve assembly 16, the evaporator 18, the condenser 20 and the compressor 22. The refrigerant expansion valve assembly 16 is disposed in fluid communication with the refrigerant lines 14B and 14C between the evaporator 18 and condenser 20. The controller 24 electrically communicates with the various components of the air conditioning system 12 including the first temperature sensor 26, the first pressure sensor 28, the compressor 22, and the refrigerant expansion valve assembly 16. In one embodiment, the first temperature sensor 26 and the first pressure sensor 28 are positioned at the outlet from the evaporator 18 or on the refrigerant line 14D between the evaporator 18 and the compressor 22.

The low pressure refrigerant vapor flows through the refrigerant line 14A from the compressor 22 where it is compressed to a high pressure vapor, raising the refrigerant's temperature and pressure, to the condenser 20. The condenser 20 cools and removes heat from the refrigerant and condenses the refrigerant from a vapor into a liquid. From the condenser 20 the refrigerant flows through refrigerant line 14B to the refrigerant expansion valve assembly 16, where it is throttled to a lower temperature and pressure. The refrigerant then flows from the refrigerant expansion valve assembly 16 through refrigerant line 14C to the evaporator 18, where it is vaporized before it flows through refrigerant line 14D on to the compressor 22.

The controller 24 monitors signals indicative of the temperature of the refrigerant sensed by the first temperature sensor 26. Additionally, the controller 24 monitors signals indicative of the pressure of the refrigerant sensed by the first pressure sensor 28. From one or both of these sensed values, the controller 24 calculates the degree of superheat present in the refrigerant downstream of the evaporator 18. The calculated degree of superheat is compared to a desired degree of superheat which would optimize operation of the air conditioning system 12. In one embodiment, if there is a difference between the calculated degree of superheat and the desired degree of superheat that exceeds an acceptable error value, the controller 24 commands the refrigerant expansion valve assembly 16 to modulate (incrementally open or close) and thereby control refrigerant flow to reduce the error value to within the acceptable error value. In one embodiment, the controller 24 correlates the position of the refrigerant expansion valve assembly 16 (the degree to which the refrigerant expansion valve assembly 16 is opened) to the amount of flow through the refrigerant expansion valve assembly 16 to the evaporator 18. As the degree of superheat is related to the amount of refrigerant flow through the evaporator 18, the degree of superheat can be controlled by controlling the flow through the refrigerant expansion valve assembly 16. In this manner, the first temperature sensor 26 and first pressure sensor 28 comprise a feedback loop to the controller 24 allowing the controller 24 to calculate the degree of superheat, compare the calculated degree of superheat to the desired degree of superheat and command the refrigerant expansion valve assembly 16 to modulate refrigerant flow therethrough to reduce the difference between the calculated degree of superheat and the desired degree of superheat.

As will be discussed subsequently, the refrigerant expansion valve assembly 16 includes a motor, a main body portion and two movable interconnected members. The members have threads with a different pitch which allows for relative movement between the two members and between the two members and the main body portion. The motor actuates the two members in response to control signals to move at least one of the members within the main body to modulate the flow of refrigerant through the main body portion of the refrigerant expansion valve assembly 16.

In one embodiment, the control signals represent a value that would reduce or eliminate the difference between the calculated degree of superheat and the desired degree of superheat. The calculated degree of superheat is determined based on at least one of the temperature or pressure obtained downstream of the evaporator 18.

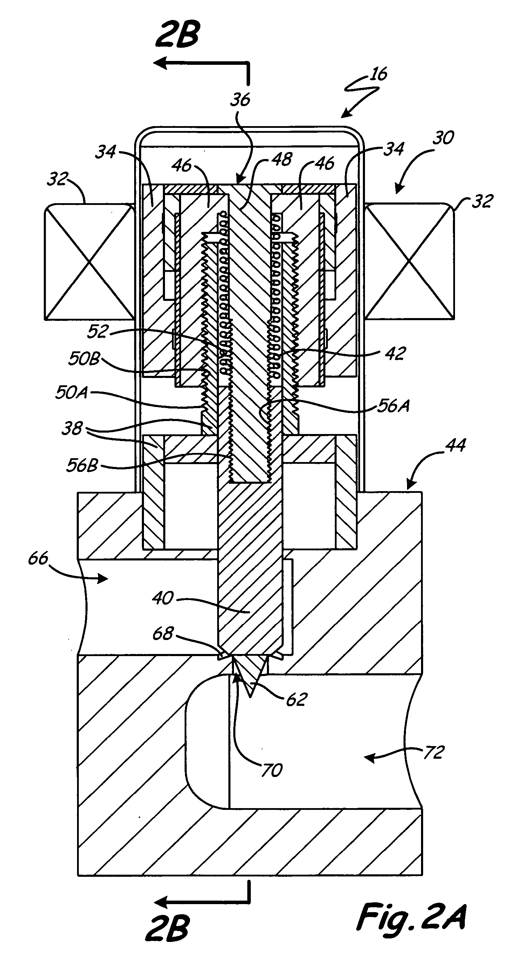

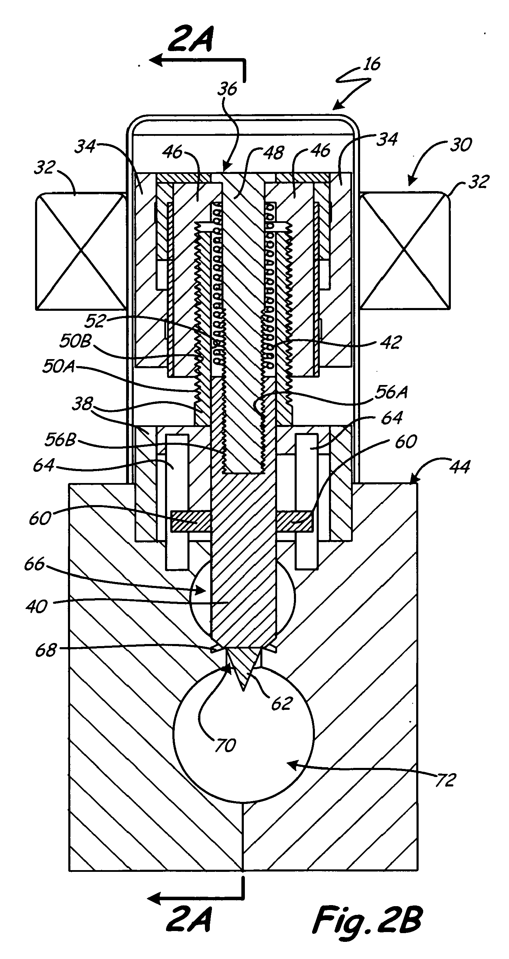

FIGS. 2A and 2B are cross-sectional views of one embodiment of the refrigerant expansion valve assembly 16. The refrigerant expansion valve assembly 16 includes a motor 30 with a stator 32 and a rotor 34, a first member 36, a rod 38, a second member (shaft or screw) 40, a bias mechanism 42 and a main body 44. The first member 36 includes a nut 46 and a first shaft or screw 48. The rod 38 includes first external threads 50A and a cavity 52. The nut 46 includes corresponding first internal threads 50B. The first shaft 48 includes second external threads 56B. The second member 40 includes corresponding second internal threads 56A, projections 60 (FIG. 2B) and a metering device or valve head 62. The main body 44 includes guides or pins 64 (FIG. 2B), a first passage 66, a valve seat 68, an intermediate passage 70 and a second passage 72.

In one embodiment, the motor 30 is a stepper motor that is responsive to control signals to rotate the rotor 34 between one or more stator 32 steps. In one embodiment, the control signals represent a value that would reduce or eliminate a difference between the calculated degree of superheat and the desired degree of superheat in the refrigerant system as discussed previously. Due to the configuration of the refrigerant expansion valve assembly 16 with a differential thread drive, actuation of the rotor 34 causes the first member 36 and second member 40 to move relative to the main body 44. In particular, the rotor 34 rotates the nut 46 on the rod 38 and rotates the first shaft 48 in the second member 40. This relative rotation is achieved by the mating threads 50A and 50B and 56A and 56B. In one embodiment, threads 50A, 50B and 56A, 56B have a differential pitch. This configuration allows the refrigerant expansion valve assembly 16 to increase the flow of refrigerant through the refrigerant system 10 (FIG. 1) by receiving control signals and actuating the rotor 34 to rotate the nut 46 in a counter-clockwise direction upward away from the main body 44 at a rate determined by threads 50A, 50B while the rotor 34 simultaneously rotates the nut 46 and shaft 48 in a counter-clockwise direction, forcing second member 40 downward away from shaft 48 at a rate determined by threads 56A, 56B. Threads 50A, 50B cause more linear translation per rotor 34 rotation than threads 56A, 56B, therefore the counter-clockwise rotor 34 rotation causes second member 40 to move upward away from the intermediate passage 70 and the valve seat 68. The step sequence of the motor 30 can be reversed to allow the rotor 34 to rotate in the clockwise direction rather than the counter-clockwise direction. With the step sequence reversed, the refrigerant expansion valve assembly 16 decreases the flow of refrigerant through the refrigerant system 10 (FIG. 1) by actuating the rotor 34 to rotate the nut 46 in the clockwise direction downward toward the main body 44 while the rotor 34 simultaneously rotates the shaft 48 clockwise forcing second member 40 upward toward shaft 48. The linear translation per revolution caused by threads 50A, 50B is greater than the linear translation per revolution caused by 56A, 56B therefore the second member 40 moves downward toward the intermediate passage 70 and the valve seat 68. In this manner, the differential pitch of threads 50A, 50B, 56A and 56B between the main body 44, the nut 46, the first shaft 48, and second member 40 allows for precise positioning of the second member 40 within the main body 44 with respect to the intermediate passage 70 to modulate refrigerant flow through the intermediate passage 70.

When, as illustrated in FIGS. 2A and 2B, the motor 30 comprises a stepper type motor the stator 32 is positioned annularly around the rotor 34. The rotor 34 connects to and rotates with the first member 36. In the embodiment shown, the rod 38 connects to and projects from an upper portion of the main body 44. The rod 38 is received in and mates with the first member 36. The cavity 52 of the stationary rod 38 receives a portion of the first member 36 and the second member 40 therein. The second member 40 is movable with respect to the rod 38 and main body 44 and mates with the first member 36. In one embodiment, the bias mechanism 42 (e.g., a spring) is disposed around the first member 36 and contacts and exerts a bias on the second member 40. The main body 44 is disposed adjacent to the motor 30 and is configured to receive at least a portion of the second member 40 therein. The rotor 34, first member 36 and second member 40 are movable with respect to the stationary stator 32, rod 38 and main body 44.

In FIGS. 2A and 2B, the first member 36 comprises the nut 46 and the first shaft 48. The first shaft 48 connects to the nut 46 and rotates therewith. The first shaft 48 extends into the cavity 52 defined by the rod 38 while the nut 46 is adapted to receive the rod 38. The nut 46 connects to the rotor 34. The outer diameter of the rod 38 has first threads 50A that have a pitch which corresponds to the pitch of first threads 50B disposed along the inner diameter of the nut 46. In this manner, the threads 50A and 50B are configured allow the nut 46 to mate with the rod 38.

A portion of the first shaft 48 extends within the cavity 52 and has the external second threads 56B thereon. The second threads 56B have a pitch that is different from the pitch of the first threads 50A and 50B. The second threads 56B have a pitch which corresponds to the pitch of second threads 56A disposed along the inner diameter of the second member 40. In this manner, the threads 56A and 56B are configured allow the first shaft 48 to mate with the second member 40.

As illustrated in FIG. 2B, the second member 40 has projections 60 that extend radially from the second member 40 to engage the main body 44. In particular, the projections 60 extend between two sets of guides or pins 64 which extend generally axially parallel to second member 40. The guides 64 restrain the second member 40 from rotating due to the rotation of the first shaft 48. Because of the interaction of the guides 64 with the projections 60 as first shaft 48 rotates, the second member 40 translates linearly with respect to the main body 44 and first shaft 48. The valve head or metering device 62 extends from a lower axial portion of the second member 40 and is adapted to be received in the valve seat 68 and intermediate passage 70. When the refrigerant expansion valve assembly 16 is in a closed position allowing no refrigerant to pass through the main body 44, the second member 40 may contact the valve seat 68 and/or the metering device 62 may obstruct the intermediate passage 70. When the refrigerant expansion valve assembly 16 is in an open position, the intermediate passage 70 fluidly connects the first passage 66 and the second passage 72. Together the first passage 66, intermediate passage 70 and the second passage 72 are configured to allow refrigerant to fluidly communicate through the main body 44 when the second member 40 is not positioned to obstruct flow therethrough. The first passage 66 and the second passage 72 are adapted to connect to the refrigerant line 14 (FIG. 1).

The passages 66, 70, and 72 along with the second member 40 act to throttle the refrigerant passing through the refrigerant expansion valve assembly 16 to a lower temperature and pressure. The amount of refrigerant flow through the refrigerant expansion valve assembly 16 during regular operation can be determined by first calibrating the refrigerant expansion valve assembly 16. During calibration the second member 40 is moved to a closed or "zero" position that eliminates all flow of refrigerant through the refrigerant expansion valve assembly 16. After zeroing, the motor 30 is incrementally actuated to rotate the rotor 34 from one stator 32 step to another. This actuation rotates the nut 46 and first shaft 48 and linearly moves the second member 40 relative to the main body 44. For each incremental move (i.e. step) of the rotor 34, fluid flow through the refrigerant expansion valve assembly 16 is measured and tabulated. In one embodiment, the tabulated measured refrigerant fluid flow is used to generate an algorithm for the controller 24 (FIG. 1). The algorithm or a tabulated lookup table is used by the controller 24 during regular operation of the refrigerant expansion valve assembly 16 to determine the amount of refrigerant flow through the refrigerant expansion valve assembly 16 based on the position of the second member 40 relative to the passages 66, 70, and 72 within the main body 44. Based upon the amount of refrigerant flow ascertained by the algorithm or lookup table, the controller 24 signals the refrigerant expansion valve assembly 16 to adjust the refrigerant flow such that the calculated degree of superheat is similar to (or within an acceptable error of) the desired degree of superheat.

In one embodiment of the refrigerant expansion valve assembly 16, the motor 30 is a stepper motor and has 104 steps. The motor 30 is responsive to control signals to actuate the rotor 34 between one or more steps. In one embodiment, the control signals represent a value that would reduce or eliminate a difference between the calculated degree of superheat and the desired degree of superheat in the refrigerant system as discussed previously. The rotation of the rotor 34 causes the first member 36 and second member 40 to move relative to the main body 44. The differential pitch of threads 50A, 50B, 56A and 56B between the main body 44, first member 36 and second member 40 allows for precise positioning of the second member 40 within the main body 44 with respect to the intermediate passage 70.

In one embodiment, the nut 46 (internal diameter) and rod 38 (external diameter) have a major diameter of about 9/16 inch (1.43 cm) and the threads 50A and 50B have a Unified Extra Fine Thread (UNEF) pitch of 24 threads/inch (9.45 threads/cm). The first shaft 48 (external diameter) and the second member 40 (internal diameter) have a major diameter of about 1/4 inch (0.635 cm) and the threads 56A and 56B have an extra fine (UNEF) pitch of 32 threads/inch (12.6 threads/cm). In this embodiment, one revolution of the rotor 34 or first member 36 linearly moves the second member 40 less than or equal to about 0.0104 inch (0.0264 cm) with respect to the main body 44. In operation, as the rotor 34 is actuated from step to step with respect to the stator 34, the second member 40 moves linearly by less than or equal to about 0.0001 inch/step (2.54e⁻⁴cm/step) either toward the closed position or toward a more open position that provides less restriction to the flow of refrigerant through the intermediate passage 70. In this manner, the refrigerant expansion valve assembly 16 modulates the flow of refrigerant through the passages 66, 70 and 72 and the refrigerant system 10 (FIG. 1).

The differential thread configuration allows the refrigerant expansion valve assembly 16 to achieve very precise control of the flow of refrigerant through the refrigerant system 10 (FIG. 1). Thus, the degree of superheat in and downstream of the evaporator 18 can be precisely controlled. This precise control is accomplished without a gear train that would add weight and parts to the system 10 and increase system 10 hysteresis. The differential thread configuration maintains the reliability of the refrigerant expansion valve assembly 16. The system also provides a feedback loop that allows the calculated degree of superheat to be compared to the desired degree of superheat. The motor 30 can be actuated to position the second member 40 relative to the main body 44 to modulate refrigerant flow through the main body 44 to reduce the difference between the calculated degree of superheat and the desired degree of superheat.

While the invention has been described with reference to an exemplary embodiment(s), it will be understood by those skilled in the art that various changes may be made and equivalents may be substituted for elements thereof without departing from the scope of the invention. In addition, many modifications may be made to adapt a particular situation or material to the teachings of the invention without departing from the essential scope thereof. Therefore, it is intended that the invention not be limited to the particular embodiment(s) disclosed, but that the invention will include all embodiments falling within the scope of the appended claims.

## Claims

1. A refrigerant expansion valve (16) for a refrigerant system (10), the refrigerant expansion valve comprising:
a main body (44) having a refrigerant flow passage (66, 70, 72) therethrough;
a motor (30) positioned adjacent the main body; and
a first (36) and second (40) movable connected members, wherein the first member is connected to the motor, and wherein the first and second members are configured with threads (50A, 50B, 56A, 56B) having a differential pitch to allow for relative movement between both members and the main body;
wherein the motor is capable of actuating the first member in response to a control signal to move the second member within the main body to modulate the flow of refrigerant through the refrigerant flow passage.

2. The refrigerant expansion valve of claim 1, wherein the main body (44, 38) has first threads (50A) with a first pitch;
the first member (36, 46, 48) having second threads (50B) with the first pitch and third threads (56B) with a second pitch, the second threads with the first pitch allowing the first member to rotatably mate with the main body; and
the second member (40) being configured to movably mate with the first member via fourth threads (56A) with the second pitch.

3. The refrigerant expansion valve of claim 1 or 2, wherein the motor (30) is a stepper motor and one (36) of the first and second members is connected to a rotor (34) of the stepper motor.

4. The refrigerant expansion valve of claim 1, 2 or 3, wherein the first member (36) has a nut (46) that includes threads (50B) with a first pitch on an inner diameter thereof, the threads mating with corresponding threads on an outer diameter of a hollow rod portion (38) of the main body.

5. The refrigerant expansion valve of claims 3 and 4, wherein the rotor (34) is fixed to the outer diameter of the nut (46) and a first shaft (48) is fixed to the nut, the first shaft extending into the hollow rod portion of the main body.

6. The refrigerant expansion valve of claim 5, wherein the first shaft (48) includes threads (56B) with a second pitch on an outer diameter thereof, the threads mating with corresponding threads (56A) on an inner diameter of the second member (40) allowing for translation of the second member relative to the main body.

7. The refrigerant expansion valve of any preceding claim, wherein the second member (40) includes a rotational stopper projection (60) that engages a guide member (64) in the main body to allow the second member to move linearly relative to the main body.

8. The refrigerant expansion valve of any preceding claim, wherein the second member (40) linearly moves less than or equal to about 0.0104 inch (0.0264 cm) per revolution of the first member (36).

9. A refrigerant system comprising a condenser (20), an evaporator (18), a refrigerant expansion valve (16) as claimed in any preceding claim fluidly connected between the condenser and the evaporator, and a controller (24) arranged to provide said control signal.

10. The refrigerant system of claim 9, wherein the control signal represents a value that reduces or substantially eliminates a difference between a calculated degree of superheat and a desired degree of superheat in the refrigerant system.

11. The refrigerant system of claim 10, wherein the calculated degree of superheat is determined based on at least one of a temperature or pressure obtained from downstream of the evaporator.

12. A method of modulating refrigerant flow in a refrigerant system comprising:
sensing at least one of a temperature or pressure between an evaporator and a compressor;
calculating a degree of superheat based upon at least one of temperature or pressure;
comparing the calculated degree of superheat to a desired degree of superheat; and
commanding a refrigerant expansion valve with a differential thread drive to modulate refrigerant flow therethrough to reduce or eliminate a difference between the calculated degree of superheat and the desired degree of superheat.

13. The method of claim 12, wherein the refrigerant expansion valve comprises:
a main body having threads with a first pitch and a refrigerant flow passage therethrough;
a first member having threads with a second pitch and corresponding threads with the first pitch, the corresponding threads with the first pitch allowing the first member to movably mate with the main body;
a second member configured to movably mate with the first member via corresponding threads having the second pitch; and
a motor having a rotor connected to the first member, for selectively actuating the first member in response to a control signal to selectively modulate the second member within the main body to control the flow of refrigerant through the refrigerant flow passage.

14. The method of claim 13, wherein the motor is a stepper motor and the rotor rotates relative to the main body between a plurality of steps in a stator portion of the motor.

15. The method of claim 13 or 14, wherein the first member has a nut with an outer diameter fixed to the rotor, the nut including corresponding threads with the first pitch on an inner diameter thereof, the threads mating with the threads with the first pitch on an outer diameter of the main body; preferably wherein the first member has a first shaft connected to the nut, the first shaft including threads with the second pitch on an outer diameter thereof, wherein the threads with the second pitch mate with the corresponding threads on an inner diameter of the second member to allow the second member to move less than or equal to about 0.0104 inch (0.0264 cm) per revolution of the rotor.
